# EUROPÄISCHE PATENTSCHRIFT

(11) **EP 0 763 443 B1**
(45) Veröffentlichungstag und Bekanntmachung des Hinweises auf die Patenterteilung: **15.09.1999**
(21) Anmeldenummer: 96109086.7
(22) Anmeldetag: 05.06.1996
(51) Int. Cl.: B60K 23/00, F16H 63/46

(54) **Antriebseinrichtung für ein Kraftfahrzeug**
Drive system for a motor vehicle
Dispositif d'entraînement pour véhicule à moteur

(30) Priorität: 16.09.1995 DE 19534418
(43) Veröffentlichungstag der Anmeldung: 19.03.1997
(73) Patentinhaber: Bayerische Motoren Werke Aktiengesellschaft, 80788 München (DE)
(72) Erfinder: Martin, Harry, 82061 Neuried (DE)

(56) Entgegenhaltungen:
- EP-A- 0 150 890
- DE-A- 3 900 987
- DE-C- 714 715
- GB-A- 2 095 774
- US-A- 4 298 106

## Beschreibung

Die Erfindung betrifft eine Antriebseinrichtung für ein Kraftfahrzeug nach dem Oberbegriff des Hauptanspruchs.

Es ist bereits bekannt, in einer Antriebseinrichtung für ein Kraftfahrzeug eine automatisierte Kupplung zu verwenden. Eine solche Antriebseinrichtung wird in der DE 37 35 960 A1 beschrieben. Hier wird die automatisierte Kupplung, gesteuert von einer Steuerungseinheit, hydraulisch durch eine Kolben/Zylinderanordnung betätigt. Fällt die hydraulische Betätigung der automatisierten Kupplung aus, kann die automatisierte Kupplung mechanisch durch einen Hebel betätigt werden, der mit der Kolbenstange der Kolben/Zylindereinheit verbunden ist.

Ebenso beschreibt die DE 39 00 987 A1 eine druckmittelbetätigte Getriebe - Kupplung für ein automatisches Gang - Schaltgetriebe, die über einen Hauptsteuerkreis durch eine Elektrik angesteuert wird. Bei Ausfall der Elektrik kann mechanisch von Hand oder über den Fuß eine Noteinrichtung aktiviert werden, über die sowohl ein Gang ausgewählt, als auch die Kupplung geschlossen werden kann.

Solche automatisierte Kupplungen haben den Nachteil, daß das Fahrzeug während der Kupplungsbetätigung wegrollen kann. Dies geschieht bei unterbrochenem Antriebsstrang aufgrund der Einwirkung der Schwerkraft auf das Fahrzeug, immer dann, wenn das Fahrzeug auf geneigtem Grund steht. Dabei ist es aufgrund der Antriebskonzeption eines Kraftfahrzeugs grundsätzlich zu vermeiden, daß dieses bei unterbrochenem Antriebsstrang in die der gewünschten Fahrtrichtung entgegengesetzte Richtung wegrollt, da dies unter Umständen beim Anfahren zu erhöhter Abnutzung der Kupplung führen kann.

Zur Vermeidung dieses Wegrollens ist es möglich, sogenannte Hillholder in den Antriebsstrang einzubauen. Diese verhindern eine Drehbewegung des Antriebs in der der gewünschten Fahrtrichtung entgegengesetzten Richtung.

Eine solche Antriebsvorrichtung beschreibt die EP 0 150 890 A2. Hier steuert ein erster hydraulischer Steuerkreis die automatisierte Kupplung und ein zweiter hydraulischer Steuerkreis steuert den Hillholder. Allerdings wird hier nicht beschrieben, daß bei Ausfall der automatisierten Kupplung eine Notbetätigung vorgesehen ist.

Es ist Aufgabe der Erfindung, eine Antriebseinrichtung für ein Kraftfahrzeug mit einer automatisierten Kupplung bereitzustellen, bei der das Wegrollen das Fahrzeugs in der der gewünschten Fahrtrichtung entgegengesetzten Richtung verhindert wird und eine Notbetätigung bei Ausfall der automatisierten Kupplung vorgesehen ist, wobei der Bauaufwand und die Kosten für Hillholdersystem und Notbetätigungseinrichtung möglichst gering gehalten werden sollen.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist eine Antriebseinrichtung für ein Kraftfahrzeug, mit einer automatisierten Kupplung mit zwei Steuerkreisen und insbesondere einem Doppelkupplungsgetriebe, zusätzlich noch mit einem Hillholder ausgestattet. Dieser Hillholder wird durch einen der beiden Steuerkreise der automatisierten Kupplung angesteuert und verhindert vorteilhafterweise das Wegrollen des Fahrzeugs in der der gewünschten Fahrtrichtung entgegengesetzten Richtung. Zum Beispiel kann als Hillholder ein Freilauf verwendet werden, der an irgendeiner Stelle im Antriebsstrang eingebaut ist und die Drehrichtung des Antriebs nur in der gewünschten Fahrtrichtung erlaubt und in der entgegengesetzten Richtung blockiert. Da ein Fahrzeug mit einer automatisierten Kupplung mit zwei hydraulischen Steuerkreisen bereits ein hydraulisches Drucksystem an Bord hat, können diese Hydraulikkomponenten und die Ansteuersoftware im Kupplungssteuergerät für die Hillholderfunktion mitgenutzt werden. Dadurch werden vorteilhafterweise die Kosten für ein Hillholdersystem stark reduziert.

Die automatisierte Kupplung besitzt einen Hauptsteuerkreis und einen Hilfssteuerkreis, wobei der Hilfssteuerkreis ausschließlich dann für die automatisierte Kupplung verwendet wird, wenn der Hauptsteuerkreis ausfällt. So kann vorteilhafterweise der Hilfssteuerkreis bei ordnungsgemäß funktionierendem Hauptsteuerkreis ausschließlich zum Steuern des Hillholders verwendet werden. Das ergibt einen einfachen Aufbau der Steuerung für den Hillholder ohne zusätzliche Steuerungskomponenten.

In einer bevorzugten Ausführung der Erfindung ist der Hillholder ein trennbarer oder zuschaltbarer Freilauf. Das hat den Vorteil, daß er von der Kupplungssensorik gesteuert und den Fahrbedingungen entsprechend gelöst werden kann.

Ein noch einfacherer Aufbau bei den Steuerungskomponenten entsteht vorteilhaftenweise dadurch, daß bei Ausfall des Hauptsteuerkreises die Steuerung des Hillholders unterdrückt wird und damit der Hilfssteuerkreis nur die automatisierte Kupplung steuert.

In einer weiteren vorteilhaften Ausführung der Erfindung wird dem Fahrer des Fahrzeugs die Unterdrückung der Steuerung des Hillholders durch eine Signaleinrichtung mitgeteilt. Das ermöglicht dem Fahrer vorteilhafterweise Maßnahmen einzuleiten, die ein Wegrollen des Fahrzeugs in der der gewünschten Fahrtrichtung entgegengesetzten Richtung verhindern.

Ein bevorzugtes Ausführungsbeispiel der Erfindung ist in der nachfolgenden Beschreibung und der zugehörigen Zeichnung näher dargestellt. Es zeigen:
- Figur 1: ein Schaltbild der hydraulischen Steuerkreise einer Antriebseinrichtung mit automatisierter Kupplung und Hillholder,
- Figur 2: eine Ausführung des Hillholders als trennbarer Freilauf und
- Figur 3: eine Ausführung des Hillholders als zuschaltbarer Freilauf.

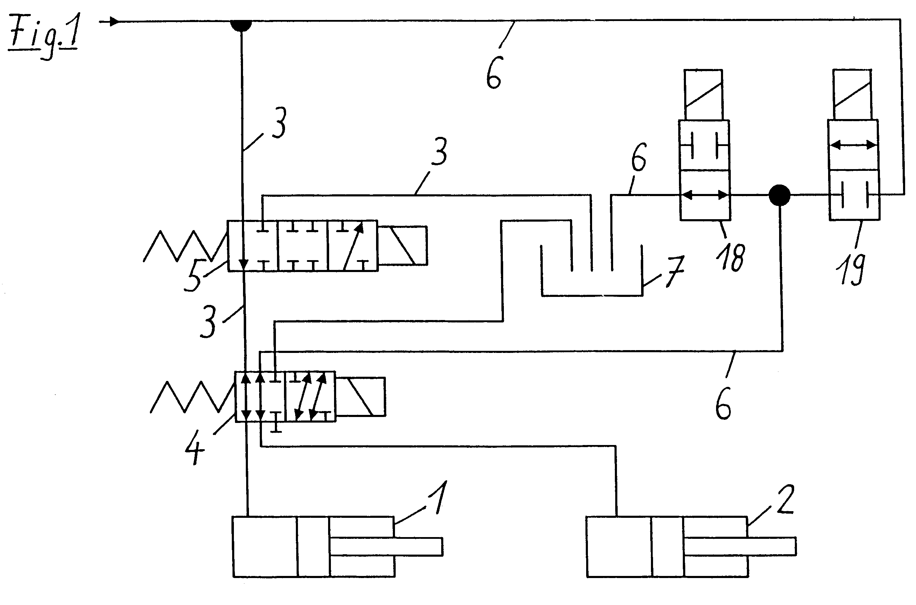

Figur 1 zeigt eine Kolben/Zylinderanordnung 1 zur hydraulischen Betätigung einer nicht dargestellten automatisierten Kupplung. Eine zweite Kolben/Zylinderanordnung 2 dient zur Betätigung eines Hillholders als nicht dargestellter Freilauf im Antriebsstrang. Ein hydraulischer Hauptsteuerkreis 3 betätigt die automatisierte Kupplung in Abhängigkeit von den Signalen einer nicht dargestellten elektronischen Hauptprozessoreinheit. Zusätzlich zu dem hydraulischen Hauptsteuerkreis 3 ist ein hydraulischer Hilfssteuerkreis 6 vorhanden, der bei Ausfall des hyraulischen Hauptsteuerkreises 3 die Betätigung der automatisierten Kupplung übernimmt. Der hydraulische Hilfssteuerkreis 6 wird angesteuert von einer nicht dargestellten elektronischen Hilfsprozessoreinheit, die bei Ausfall der elektronischen Hauptprozessoreinheit die Ansteuerung der Kupplungsfunktionen übernimmt.

Bei dieser Antriebseinrichtung für ein Kraftfahrzeug, die auch insbesondere mit einem Doppelkupplungsgetriebe ausgestattet sein kann, wird nun der Hillholder in den hydraulischen Hilfssteuerkreis 6 integriert. Der hydraulische Hilfssteuerkreis 6 betätigt, bei ordnungsgemäß durch den hydraulischen Hauptsteuerkreis 3 angesteuerter automatisierter Kupplung, den Hillholder. Der Hillholder verhindert, als trennbarer oder zuschaltbarer Freilauf ausgebildet, das Wegrollen des Fahrzeugs in der der gewünschten Fahrtrichtung entgegengesetzten Richtung, gesteuert von der Hilfsprozessoreinheit.

Fällt die Hauptprozessoreinheit oder der hydraulische Hauptsteuerkreis 3 aus, so übernimmt die Hilfprozessoreneinheit bzw. der hydraulische Hilfssteuerkreis 6 die Ansteuerung der automatisierten Kupplung. Die Ansteuerung des Hillholders wird dann unterdrückt. Dies wird dem Fahrer des Kraftfahrzeuges durch eine nicht gezeichnete Signaleinrichtung angezeigt. Ein hydraulisches Schaltventil 4 schaltet in diesem Fall die hydraulische Verbindung der automatisierten Kupplung vom hydraulischen Hauptsteuerkreis 3 zum hydraulischen Hilfssteuerkreis 6 um. Dabei wird durch ein weiteres hydraulisches Schaltventil 5 der hydraulische Hauptsteuerkreis 3 zu einem Öltank 7 hin drucklos geschaltet. Jetzt übernehmen zwei Schaltventile für Druckabbau 18 und Druckaufbau 19 im hydraulischen Hilfssteuerkreis 6, die bisher die Hillholderfunktion ansteuerten, die Steuerung der automatisierten Kupplung und der Hillholder wird durch das hydraulische Schaltventil 4 zum Öltank 7 hin drucklos geschaltet.

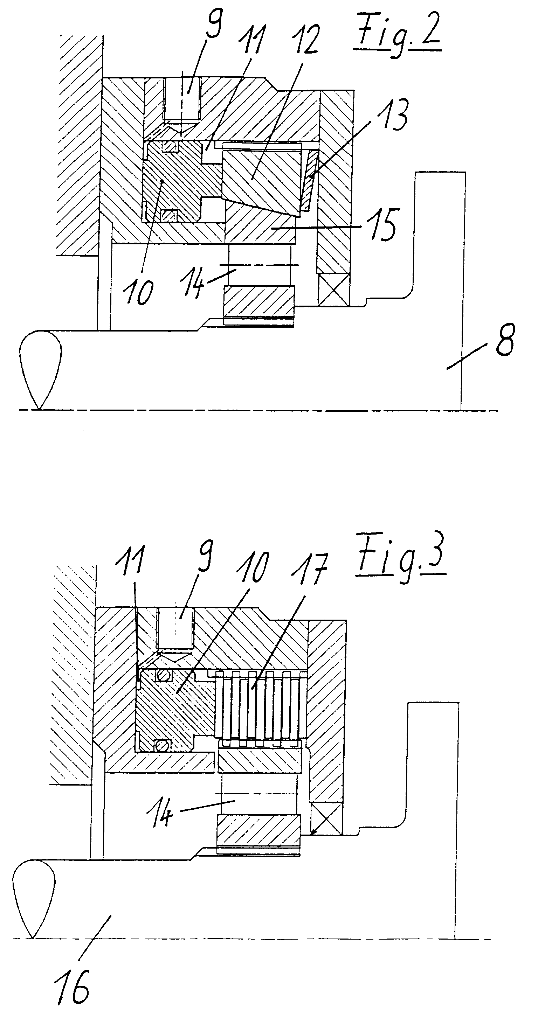

Figur 2 zeigt einen trennbaren Freilauf als Hillholder. Dieser kann in der Antriebseinrichtung des Kraftfahrzeugs, zum Beispiel auf einer Vorgelegewelle 8 eines nicht gezeichneten Getriebes, eingebaut sein. Bei der Anordnung des Freilaufs auf der Vorgelegewelle 8 ist die Hillholderfunktion in allen Schaltstufen des nicht gezeichneten Getriebes wirksam. Ein Hydraulikanschluß 9 verbindet den hydraulischen Hilfssteuerkreis 6 mit einem Ringkolben 10 in einem Ringzylinder 11. Der Ringkolben 10 liegt an einem Konusaußenring 12 an und kann diesen bei Druckbeaufschlagung aus dem hydraulischen Hilfssteuerkreis 6 gegen die Kraft einer Tellerfeder 13 axial entlang der Achse der Vorlegewelle 8 verschieben. Dabei wird die Blockierfunktion des Hillholders gelöst und die Vorgelegewelle 8 kann sich in beide Richtungen drehen. Ist der hydraulische Hilfssteuerkreis 6 drucklos, so blockiert der Freilauf eine Drehrichtung der Vorgelegewelle 8. Damit ist der Hillholder betätigt. Dabei ist der Freilauf 14 so beschaffen, daß bei höheren Wellendrehzahlen die nicht gezeichneten Klemmkörper sich nicht mehr in Kontakt mit einem Konusinnenring 15 befinden. Dadurch verursacht der Hillholder kein Schleppmoment und keinen unnötigen Verschleiß.

Figur 3 zeigt einen Hillholder, als zuschaltbaren Freilauf ausgebildet, auf einer Gtriebeausgangswelle 16. Dadurch ist die Hillholderfunktion nur im Vorwärtsgang verwirklicht, das heißt, das Zurückrollen des Fahrzeugs wird verhindert. Der hydraulische Hilfssteuerkreis 6 ist wieder über den Hydraulikanschluß 9 mit dem Ringzylinder 11 verbunden. Durch Druck auf den Ringkolben 10 wird eine Lamellenkupplung 17 geschlossen und damit die Hillholderfunktion aktiviert. Das kann zum Beispiel durch einen nicht gezeichneten Neigungssensor oder nicht gezeichneten Drehrichtungssensor ausgelöst werden.

## Patentansprüche

1. Antriebseinrichtung für ein Kraftfahrzeug, insbesondere mit einem Doppelkupplungsgetriebe, mit einer automatisierten Kupplung, die über einen hydraulischen Hauptsteuerkreis (3) angesteuert wird und mit einem Hillholder, der über einen hydraulischen Hilfssteuerkreis (6) angesteuert wird, dadurch gekennzeichnet, daß die automatisierte Kupplung über den hydraulischen Hilfssteuerkreis (6) angesteuert wird, wenn der hydraulische Hauptsteuerkreis (3) ausfällt.

2. Antriebseinrichtung nach Anspruch 1, dadurch gekennzeichnet, daß bei Ausfall des Hauptsteuerkreises (3) der Hilfssteuerkreis (6) nur die automatisierte Kupplung steuert und die Steuerung des Hillholders unterdrückt wird.

3. Antriebseinrichtung nach Anspruch 2, dadurch gekennzeichnet, daß eine Signaleinrichtung vorhanden ist, die dem Fahrer die Unterdrückung der Steuerung des Hillholders mitteilt.

4. Antriebseinrichtung nach einem der Ansprüche 1 bis 3, dadurch gekennzeichnet, daß der Hillholder ein trennbarer oder ein zuschaltbarer Freilauf (14) ist.

## Claims

1. A drive means for a motor vehicle, especially comprising a double clutch gear unit, with an automated clutch which is actuated by a main hydraulic control circuit (3) and comprising a hillholder actuated by an auxiliary hydraulic control circuit (6), characterised in that the automated clutch is actuated by the auxiliary hydraulic control circuit (6) if the main hydraulic control circuit (3) fails.

2. A drive means according to claim 1, characterised in that if the main control circuit (3) fails, the auxiliary control circuit (6) only actuates the automated clutch whereas the hillholder control is suppressed.

3. A drive means according to claim 2, characterised in that a signal means is provided and informs the driver when the hillholder control is suppressed.

4. A drive means according to any of claims 1 to 3, characterised in that the hillholder is a disconnectable or a connectable freewheel (14).

## Revendications

1. Dispositif d'entraînement pour un véhicule à moteur, en particulier avec une transmission à embrayage double, équipée d'un embrayage automatisé, commandé par un circuit de commande principal (3) de nature hydraulique, et avec un encliquetage anti-recul, commandé par l'intermédiaire d'un circuit de commande auxiliaire (6) de nature hydraulique,
caractérisé en ce que
l'embrayage automatisé est commandé par le circuit de commande auxiliaire (6) hydraulique, lorsque le circuit de commande principal hydraulique (3) tombe en panne.

2. Dispositif d'entraînement selon la revendication 1,
caractérisé en ce qu'
en cas de panne du circuit de commande principal (3), le circuit de commande auxiliaire (6) ne commande que l'embrayage automatisé et la commande de l'encliquetage anti-recul est supprimée.

3. Dispositif d'entraînement selon la revendication 2,
caractérisé en ce qu'
est prévu un dispositif de signalisation, communiquant au conducteur la cessation de la commande de l'encliquetage anti-recul.

4. Dispositif d'entraînement selon l'une des revendications 1 à 3,
caractérisé en ce que
l'encliquetage anti-recul est une roue libre (14) pouvant être désaccouplée ou accouplée.
